# EUROPÄISCHE PATENTSCHRIFT

(11) **EP 1 735 364 B1**
(45) Veröffentlichungstag und Bekanntmachung des Hinweises auf die Patenterteilung: **16.09.2009**
(21) Anmeldenummer: 05739645.9
(22) Anmeldetag: 02.04.2005
(51) Int. Cl.: C08G 18/22, C08G 18/79, C08G 18/42, C09D 175/06

(54) **ABSPALTERFREIER POLYURETHAN-PULVERLACK MIT NIEDRIGER EINBRENNTEMPERATUR**
POLYURETHANE POWDER COATING THAT IS DEVOID OF SEPARATION PRODUCTS AND HAS A LOW STOVING TEMPERATURE
VERNIS PULVERULENT DE POLYURETHANE EXEMPT DE SEPARATEURS PRESENTANT UNE FAIBLE TEMPERATURE DE RECUIT

(30) Priorität: 02.04.2004 DE 102004017005
(43) Veröffentlichungstag der Anmeldung: 27.12.2006
(73) Patentinhaber: Bayer MaterialScience AG, 51368 Leverkusen (DE)
(72) Erfinder: RAWLINS, James, Petal, MS 39465 (US); GRAHL, Michael, 51371 Leverkusen (DE); GRESZTA-FRANZ, Dorota, 40699 Erkrath (DE); LAAS, Hans-Josef, 51519 Odental (DE); HALPAAP, Reinhard, 51519 Odenthal (DE)
(86) Internationale Anmeldenummer: PCT/EP2005/003464
(87) Internationale Veröffentlichungsnummer: WO 2005/095482

(56) Entgegenhaltungen:
- WO-A-00/34355
- WO-A-02/087784

## Beschreibung

Unter dem Druck einer immer strengeren Umweltgesetzgebung gewann in den letzten Jahren die Entwicklung von Pulverlacken neben high-solids-Lacken und wässrigen Beschichtungssystemen zunehmen an Bedeutung. Pulverlacke setzen bei der Applikation keinerlei schädliche Lösemittel frei, lassen sich mit sehr hohem Materialausnutzungsgrad verarbeiten und gelten daher als besonders umweltfreundlich und wirtschaftlich.

Qualitativ besonders hochwertige, licht- und wetterbeständige Beschichtungen lassen sich mit hitzehärtbaren Pulverlacken auf Polyurethanbasis herstellen. Die heute im Markt etablierten Polyurethan-(PUR)-Pulverlacke bestehen im allgemeinen aus festen Polyesterpolyolen, die mit festen blockierten aliphatischen oder meist cycloaliphatischen Polyisocyanaten ausgehärtet werden. Diese Systeme weisen allerdings den Nachteil auf, dass bei der thermischen Vernetzung die als Blockierungsmittel eingesetzten Verbindungen abgespalten werden und überwiegend entweichen. Deshalb müssen bei ihrer Verarbeitung aus apparativen Gründen sowie aus Gründen der Ökologie und Arbeitshygiene besondere Vorkehrungen zur Reinigung der Abluft und/oder Wiedergewinnung des Blockierungsmittels getroffen werden.

Eine Möglichkeit, die Emission von Blockierungsmitteln zu umgehen, stellen die bekannten Uretdiongruppen aufweisenden PUR-Pulverlaclevemetzer dar (z. B. DE-A 2 312 391, DE-A 2 420 475, EP-A 0 045 994, EP-A 0 045 996, EP-A 0 045 998, EP-A 0 639 598 oder EP-A 0 669 353). Als Vernetzungsprinzip wird bei diesen Produkten die thermische Rückspaltung von Uretdiongruppen in freie Isocyanatgruppen und deren Reaktion mit dem hydroxyfunktionellen Bindemittel genutzt. In der Praxis finden Uretdionpulverlackvemetzer bis heute allerdings nur wenig Verwendung. Die Ursache hierfür liegt in der vergleichsweise geringen Reaktivität der intern blockierten Isocyanatgruppen, die in der Regel Einbrenntemperaturen von mindestens 160°C erforderlich macht.

Obwohl bekannt ist, dass die Aufspaltung von Uretdiongruppen insbesondere in Gegenwart hydroxylgruppenhaltiger Reaktionspartner bereits ab etwa 100°C merklich einsetzt, verläuft die Reaktion in diesem Temperaturbereich noch derart langsam, dass zur vollständigen Aushärtung von Lackfilmen für einen praktischen Einsatz unrealistisch lange Zeiten von mehreren Stunden benötigt werden. Zwar werden in der DE-A 2 420 475, der DE-A 2 502 934 oder EP-A 0 639 598 als mögliche Einbrennbedingungen für uretdiongruppenhaltige Pulverlaclcsysteme bereits Temperaturen ab 110°C, in der DE-A 2 312 391 sogar Temperaturen ab 90°C genannt, die konkret beschriebenen Ausführungsbeispiele zeigen allerdings, dass sich auch mit den in diesen Veröffentlichungen beschriebenen Pulverlacken ausreichend vernetzte Beschichtungen unter praxisnahen Einbrennzeiten von maximal 30 min erst ab Temperaturen von 150 bis 160°C erhalten lassen. Auf welche Weise man Pulverlacke bereitstellen kann, die tatsächlich bereits bei Temperaturen unterhalb von 150°C bis !60°C in gewerblich nutzbarem Umfang vollständig ausgehärtet werden können, wird in diesen Publikationen nicht offenbart.

Es hat nicht an Versuchen gefehlt, die Aushärtung von uretdionvernetzenden PUR-Pulverlacken durch Mitverwendung geeigneter Katalysatoren zu beschleunigen. Zu diesem Zweck wurden bereits unterschiedliche Verbindungen vorgeschlagen, beispielsweise die aus der Polyurethanchemie bekannten metallorganischen Katalysatoren, wie Zinn(II)-acetat, Zinn(II)-octoat, Zinn(II)-ethylcaproat, Zinn(II)-laurat, Dibutylzinndiacetat, Dibutylzinndilaurat, Dibutylzinnmaleat (z.B. EP-A 0 045 994, EP-A 0 045 998, EP-A 0 601 079, WO 91/07452 oder DE-A 2 420 475), Eisen(III)-chlorid, Zinkchlorid, Zink-2-ethylcaproat und Molybdänglykolat, tertiäre Amine, wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin (z.B. EP-A 0 639 598) oder N,N,N'-trisubstituierte Amidine, insbesondere bicyclische Amidine, wie 1,5-Diazabicyclo[4.3.0]non-5-en (DBN) (z.B. EP-A 0 803 524).

Von diesen Katalysatoren erlauben die genannten bicyclischen Amidine die niedrigsten Einbrenntemperaturen. Sie führen gleichzeitig jedoch zu einer für viele Anwendungsbereiche unakzeptabel hohen Einbrennvergilbung. Aus diesem Grund konnten sich Amidin-katalysierte Uretdionsysteme bisher nicht im Markt durchsetzen. In der Praxis kommen heute im allgemeinen Lewis-Säuren, insbesondere zinnorganische Verbindungen der genannten Art, als Katalysatoren zum Einsatz. Sie gestatten die Formulierung blockierungsmittelfreier Uretdionpulverlacke, die sicher und reproduzierbar beispielsweise innerhalb von 30 min bei einer Temperatur von 150°C, oder, wenn kürzere Taktzeiten erwünscht sind, beispielsweise innerhalb von 15 min bei 180°C zu vergilbungsstabilen Beschichtungen guter Lösemittelbeständigkeit und Elastizität ausreagieren.

Sehr spezielle, komplexe Pulverlackformulierungen erlauben darüber hinaus eine weitere Absenkung der Einbrenntemperatur.

Nach der Lehre der EP-B 1 137 689 werden Lewissäure-Katalysatoren, wie z.B. die vorstehend genannten Zinn- oder Zinkverbindungen, durch saure Gruppen, wie z.B. Carboxylgruppen, inhibiert. Ihre volle katalytische Aktivität können sie in einem Uretdionpulverlacksystem daher nur entfalten, wenn das eingesetzte hydroxyfunlctionelle Bindemittel frei von Carboxylgruppen ist. Aus diesem Grund wird den in dieser Veröffentlichung beschriebenen Pulverlacken, die aus üblichen hydroxyfunktionellen Bindemitteln, Uretdiongruppen enthaltenden Vernetzern und speziellen Lewissäurekatalysatoren bestehen, eine ausreichende Menge eines gegenüber Carboxylgruppen reaktiven Agens, beispielsweise eines Epoxids, zugesetzt, um im Bindemittel gegebenenfalls noch vorhandene Carboxylgruppen möglichst vollständig umzusetzen und so aus dem System zu entfernen. Auf diese Weise läßt sich die Reaktivität der Polyurethanpulver so weit steigern, dass die Aushärtung bereits ab einer Temperatur von ca. 120°C einsetzt.

Die erhöhte Reaktivität der säurefreien katalysierten Pulverlacke wird in den Ausführungsbeispielen der EP-B 1 137 689 ausschließlich durch DSC-Untersuchungen belegt. Ergebnisse lacktechnischer Untersuchungen werden nicht offenbart. Eigene Versuche mit realen Pulverlackformulierungen bestätigen, dass sich unter den in der EP-B 1 137 689 genannten Bedingungen, d. h. unter Verwendung von Polyolen niedriger Säurezahlen von max. 5 mg KOH/g und Zusatz einer entsprechenden Menge eines Epoxids, bereits ab Temperaturen von 120°C vernetzte Beschichtungen erhalten lassen. Diese zeigen allerdings ein völlig unzureichendes Verlaufsverhalten, was sich in einer starker Oberflächenstruktur und mangelndem Glanz niederschlägt.

Die Möglichkeit, die Reaktivität Lewissäure-katalysierter Uretdionpulverlacke durch Entfernen der inhibierenden Rest-Carboxylgruppen des Polyesterharzes durch Umsetzung mit einem Epoxid zu steigern, wird auch in Metalloberfläche, Jahrgang 55 (2001) 6, S. 52-54 diskutiert. In dieser Veröffentlichung fmdet sich ebenfalls der Hinweis, dass sich unter Einsatz handelsüblicher Pulverlackhärze und -härter bei einer Temperatur von 130°C und einer Einbrenndauer von 30 min zwar vollständig ausgehärtete Lackfilme erhalten lassen, diese allerdings ein schlechtes Verlaufsverhalten zeigen. Der ungenügende Verlauf wird dabei auf die Verwendung kommerzieller Rohstoffe zurückgeführt, die speziell für Einbrenntemperaturen oberhalb 160°C entwickelt wurden und sich daher für Niedertemperaturanwendungen nicht optimal eignen.

Aufgabe der vorliegenden Erfindung war es nun, neue abspalterfreie PUR-Pulverlacke auf Basis gut verfügbarer handelsüblicher Bindemittelkomponenten zur Verfügung zu stellen, die bei ebenso niedrigen Einbrenntemperaturen bzw. entsprechend kurzen Einbrennzeiten aushärten wie die Systeme der EP-B 1 137 689 und dabei völlig vernetzte Lackfilme ergeben, die trotz der hohen Reaktivität sehr gute Oberflächeneigenschaften, insbesondere einen hervorragenden Verlauf, zeigen.

Diese Aufgabe konnte nun durch die Bereitstellung Zink-katalysierter Uretdionpulverlacke auf Basis von Bindemitteln mit einem definierten Mindestgehalt an Carboxylgruppen gelöst werden.

Die vorliegende Erfindung beruht auf der überraschenden Beobachtung, dass sich mit abspalterfreien PUR-Pulverlacken, bestehend aus Uretdionpulverlackvernetzern, üblichen hydroxyfunktionellen Bindemitteln, Zink-Katalysatoren sowie einer den im System vorliegenden Carboxylgruppen mindestens äquimoaren Menge einer gegenüber Carboxylgruppen reaktiven Verbindung, bereits bei Temperaturen ab 110°C elastische und lösemittelbeständige Beschichtungen von hervorragendem Verlauf erhalten lassen, wenn als Bindemittel Pulverlackpolyole mit Säurezahlen von mindestens 6 mg KOH/g, d.h. mit vergleichsweise hohen Restgehalten an Carboxylgruppen, eingesetzt werden, während die Verwendung von carboxylarmen oder -freien Bindemitteln unter ansonsten gleichen Bedingungen zu den oben beschriebenen erheblichen Verlaufsstörungen führt. Obwohl die Anwesenheit von Carboxylgruppen die katalytische Aktivität von Lewissäuren auf die Uretdionvernetzung vermindert und der Carboxylgruppengehalt damit einen wesentlichen Einfluss auf die Reaktivität und damit die Vernetzungstemperatur hat, sind die in EP-B 1 137 689 beschriebenen Pulverlackbindemittel ausschließlich über ihren Gehalt an OH-Gruppen definiert. Es finden sich keinerlei Angaben über erlaubte Maximal- oder gar erforderliche Minimalgehalte an Carboxylgruppen im Reaktionssystem. Die Ausführungsbeispiele beschreiben als Bindemittelkomponente lediglich ein Polyesterpolyol mit einer Säurezahl ≤ 5 mg KOH /g sowie ein praktisch säurefreies Polycaprolactonpolyol und legen damit nahe, Bindemittel mit möglichst niedriger Säurezahl einzusetzen.

Gegenstand der vorliegenden Erfindung ist ein Polyurethan-Pulverlack, enthaltend
A) eine unterhalb von 40°C in fester und oberhalb von 130°C in flüssiger Form vorliegende hydroxyfunktionelle Bindemittelkomponente mit einem Gehalt an Carboxylgruppen (berechnet als COOH; Molekulargewicht = 45) von 0,5 bis 2,0 Gew.-%, bestehend aus
   A1) mindestens einem polymeren Polyol mit einer OH-Zahl von 15 bis 200 mg KOH/g und einem mittleren (aus der Funktionalität und dem Hydroxylgehalt berechenbaren oder durch Gelpermeationschromatographie bestimmbaren) Molekulargewicht von 400 bis 10000
      und gegebenenfalls
   A2) mindestens einer, mindestens eine Carboxylgruppe aufweisenden Komponente,
B) eine unterhalb von 40°C in fester und oberhalb von 125°C in flüssiger Form vorliegende Uretdiongruppen und gegebenenfalls freie Isocyanatgruppen aufweisende Polyadditionsverbindung auf Basis aliphatischer und/oder cycloaliphatischer Diisocyanate,
C) mindestens eine Zink-Verbindung als Aushärtekatalysator,
D) eine gegenüber Carboxylgruppen reaktive Gruppen aufweisende Komponente eines mittleren Molekulargewichtes von 200 bis 5000,
   und gegebenenfalls
E) weitere aus der Pulverlacktechnologie bekannte Hilfs- und Zusatzstoffe,
   mit der Maßgabe, dass die Komponenten A) und B) in solchen Mengenverhältnissen vorliegen, dass auf jede Hydroxylgruppe der Komponente A) 0,8 bis 2,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, die Komponenten A) und D) in solchen Mengenverhältnissen vorliegen, dass auf jede Carboxylgruppe der Komponente A) 0,8 bis 2,0 gegenüber Carboxylgruppen reaktive Gruppe der Komponente D) entfallen, wobei bei Mitverwendung von aliphatischen und/oder cycloaliphatischen Dicarbonsäuren mit 4 bis 20 Kohlenstoffatomen und/oder aliphatischen Hydroxycarbonsäuren mit 4 bis 18 Kohlenstoffatomen als Komponente A2) der Anteil der Komponenten A2) und D) an der Gesamtmenge der Komponenten A), B), und D) weniger als 10 Gew.-% beträgt und der Anteil der Komponente C) an der Gesamtmenge der Komponenten A) bis E) 0,05 bis 5 Gew.-% beträgt.

Gegenstand der Erfindung ist auch die Verwendung dieses Pulverlackes zur Beschichtung beliebiger hitzeresistenter Substrate, also solchen, die sich bei den Einbrenntemperaturen nicht unerwünscht physikalisch (mechanische Eigenschaften) oder geometrisch (Form) verändern..

Bei der in den erfindungsgemäßen Pulverlacken enthaltenen Komponente A) handelt es sich um eine hydroxyfunktionelle Bindemittelkomponente mit einem Gehalt an Carboxylgruppen (berechnet als COOH; Molekulargewicht = 45) von 0,5 bis 2,0 Gew.-%, die unterhalb von 40°C in fester und oberhalb 130°C in flüssiger Form vorliegt und aus mindestens einem polymeren Polyol A1) und gegebenenfalls mindestens einer, mindestens eine Carboxylgruppe aufweisenden Komponente A2) besteht.

Als polymere Polyole A1) kann die Bindemittelkomponente A) beliebige aus der Pulverlacktechnologie bekannte Hydroxylgruppen aufweisende Bindemittel mit einer OH-Zahl von 15 bis 200 mg KOH/g, vorzugsweise von 25 bis 150 mg KOH/g, enthalten, die ein mittleres (aus der Funktionalität und dem Hydroxylgehalt berechenbares) Molekulargewicht von 400 bis 10000, vorzugsweise von 1000 bis 5000 aufweisen. Die Polyolkomponenten A1) können bis zu 2,0 Gew.-%, vorzugsweise bis zu 1,6 Gew.-%, besonders bevorzugt bis zu 1,2 Gew.-% an Carboxylgruppen enthalten.

Derartige Bindemittel sind beispielsweise hydroxylgruppenhaltige Polyester, Polyacrylate oder Polyurethane, wie sie z. B. in der EP-A 0 0 45 998 oder der EP-A 0 254 152 als Pulverlackbindemittel exemplarisch beschrieben sind, aber auch beliebige Mischungen solcher Harze.

Bevorzugt handelt es sich bei der Polyolkomponente A1) um hydroxylgruppenhaltige Polyester, deren Erweichungstemperatur - bestimmt nach der Differential-Thermoanalyse (DTA) - innerhalb des Temperaturbereiches von 40 bis 120°C, besonders bevorzugt innerhalb des Temperaturbereiches von 45 bis 110°C, liegt.

Gegebenenfalls kann die Bindemittelkomponente A) der erfindungsgemäßen Pulverlacke neben den Polyolen A1) carboxyfunktionelle Komponenten A2) enthalten.

Hierbei handelt es sich beispielsweise um beliebige ein- oder mehrwertige Carbonsäuren aliphatischer, cycloaliphatischer, aromatischer und/oder heteroaromatischer Natur, die bis zu 20 Kohlenstoffatome aufweisen und gegebenenfalls, z.B. durch Halogenatome, substituiert und/oder ungesättigt sein können.

Geeignete Carbonsäuren A2) sind beispielsweise solche des Molekulargewichtsbereiches 46 bis 370, wie z.B. Ameisensäure, Essigsäure, Propionsäure, Buttersäure, Valeriansäure, Capronsäure, Caprylsäure, Pelargonsäure, Caprinsäure, Undecansäure, Laurinsäure, Tridecansäure, Tetradecansäure, Pentadecansäure, Palmitinsäure, Stearinsäure, Arachiensäure, Oxalsäure, Malonsäure, Bernsteinsäure, Glutarsäure, Adipinsäure, Pimelinsäure, Suberinsäure, Azelainsäure, Sebacinsäure, Undecandisäure, Dodecandisäure, Tridecandisäure, Tetradecandisäure, Pentadecandisäure, Hexadecandisäure, Octadecandisäure, Eicosandisäure, die isomeren Cyclohexandicarbonsäuren, Maleinsäure, Phenylethansäure, Benzoesäure, Phthalsäure, Isophthalsäure, Terephthalsäure, Tetrahydrophthalsäure, Trimellitsäure oder die isomeren Pyridindicarbonsäuren.

Geeignet sind auch Hydroxycarbonsäuren, wie z.B. Weinsäure, Äpfelsäure, Citronensäure oder Salicylsäure, Oxocarbonsäuren, wie z. B. Brenztraubensäure oder Acetessigsäure, und ungesättigte Carbonsäuren, wie z.B. Acrylsäure, Methacrylsäure, Crotonsäure, Isocrotonsäure, Ölsäure, Linolsäure, Linolensäure, Maleinsäure, Fumarsäure, Citraconsäure oder Zimtsäure.

Ebenfalls geeignete Komponenten A2) sind carboxyfunktionelle Polymere, insbesondere die aus der Pulverlacktechnologie als Bindemittel bekannten Polycarboxypolyester und Polycarboxypolyacrylate mit Säurezahlen im Bereich von 10 bis 150 mg KOH/g, vorzugsweise von 30 bis 60 mg KOH/g, wie sie beispielhaft in DE-A 1 992 5543 von Seite 3 Zeile 62 bis Seite 4 Zeile 58 beschrieben sind.

Besonders geeignete carboxyfunktionelle Komponenten A2) sind gesättigte, ein- oder mehrwertige aliphatische und/oder cycloaliphatische Carbonsäuren mit 4 bis 20 Kohlenstoffatomen, die einen Schmelzpunkt im Bereich von 40 - 160°C aufweisen, die genannten Polycarboxypolyester oder beliebige Gemische solcher Komponenten. Ganz besonders bevorzugt sind die genannten Polycarboxypolyester.

Die polymeren Polyole A1) und die gegebenenfalls mitzuverwendenden carboxyfunktionellen Komponenten A2) kommen in den erfindungsgemäßen Pulverlacken in solchen Mengenverhältnissen zum Einsatz, dass die aus A1) und gegebenenfalls A2) bestehende Bindemittelkomponente A) von 0,5 bis 2,0 Gew.-%, vorzugsweise von 0,6 bis 1,6 Gew.-%, besonders bevorzugt von 0,8 bis 1,2 Gew.-%, an Carboxylgruppen aufweist. Dies bedeutet, dass die Mitverwendung von carboxyfunktionellen Komponenten A2) zwingend erforderlich ist, wenn in den erfindungsgemäßen Pulverlacken polymere Polyole A1) eingesetzt werden, die weniger als 0,5 Gew.-%, vorzugsweise weniger als 0,6 Gew.-%, besonders bevorzugt weniger als 0,8 Gew.-% an Carboxylgruppen enthalten.

Aus der EP-B 0 744 421 ist bekannt, dass Pulverlacke, die neben hydroxyfunktionellen Bindemitteln und Uretdiongruppen aufweisenden Vernetzern, zusätzlich niedermolekulare Dicarbonsäuren oder Hydroxycarbonsäuren sowie eine gegenüber Carboxylgruppen reaktive Gruppen aufweisende Vernetzerkomponente enthalten, zu völlig matten Lackfilmen aushärten, wenn der Anteil der Di- bzw. Hydroxycarbonsäuren und der gegenüber Carboxylgruppen realctiven Vernetzerkomponente am gesamten Bindemittelsystem (ohne Hilfs- und Zusatzstoffe) mindestens 10 Gew.-% beträgt.

Für den erfindungsgemäßen Pulverlack bedeutet dies, dass bei Mitverwendung der oben genannten aliphatischen und/oder cycloaliphatischen Dicarbonsäuren mit 4 bis 20 Kohlenstoffatomen und/oder aliphatischen Hydroxycarbonsäuren mit 4 bis 18 Kohlenstoffatomen als Komponente A2) der Anteil der Komponenten A2) und D) an der Gesamtmenge der Komponenten A), B), und D) weniger als 10 Gew.-%, vorzugsweise maximal 9 Gew.-%, besonders bevorzugt maximal 8 Gew.-% betragen darf, damit glänzende Beschichtungen erhalten werden.

In den erfindungsgemäßen Pulverlacken werden die hydroxyfunktionellen Bindemittel A) mit einer gegenüber Hydroxylgruppen reaktiven Vernetzerkomponenten B) kombiniert. Hierbei handelt es sich um unterhalb von 40°C in fester und oberhalb von 125°C in flüssiger Form vorliegende Uretdiongruppen und gegebenenfalls freie Isocyanatgruppen aufweisende Polyadditionsverbindungen auf Basis aliphatischer und/oder cycloaliphatischer Diisocyanate, insbesondere um solche auf Basis von 1,6-Hexamethylendiisocyanat (HDI), 1-Isocyanato-3,3,5-trimethyl-5-isocyanatomethylcyclohexan (Isophorondiisocyanat, IPDI), 4,4'- und/oder 4,2'-Diisocyanatodicyclohexylmethan, 1,3-Diisocyanato-2(4)-methylcyclohexan oder beliebiger Gemische dieser Diisocyanate.

Die Herstellung solcher Polyadditionsverbindungen durch Umsetzung Uretdiongruppen aufweisender Polyisocyanate mit gegenüber Isocyanatgruppen reaktiven difunktionellen und gegebenenfalls monofunktionellen Verbindungen, insbesondere zweiwertigen und gegebenenfalls einwertigen Alkoholen ist prinzipiell bekannt und wird beispielsweise in DE-A 2 420 475, EP-A 0 045 996, EP-A 0 045 998, EP-A 0 639 598, EP-A 0 669 353, EP-A 1 024 158 oder WO 04/005363 beschrieben. Die als Komponente B) in Betracht kommenden Uretdiongruppen und gegebenenfalls freie Isocyanatgruppen aufweisenden Polyadditionsverbindungen weisen im allgemeinen einen Gehalt an Uretdiongruppen (berechnet als C₂N₂O₂, Molekulargewicht = 84) von 3 bis 19 Gew.-% und einen Gehalt an freien Isocyanatgruppen (berechnet als NCO; Molekulargewicht = 42) von 0 bis 6,0 Gew.-% auf. Der Schmelzpunkt bzw. Schmelzbereich dieser Verbindungen liegt im allgemeinen innerhalb des Temperaturbereiches von 40 bis 125°C.

Als Komponente B) besonders bevorzugte Uretdiongruppen aufweisende Polyadditionsverbindungen sind solche, die einen Mindestgehalt an Carbonsäureestergruppen (berechnet als CO₂; Molekulargewicht = 44) und/oder Carbonatgruppen (berechnet als CO₃; Molekulargewicht = 60) von 1 Gew.-% aufweisen. Diese besonders bevorzugten Uretdiongruppen aufweisenden Polyadditionsverbindungen sind ebenfalls bereits bekannt. Ihre Herstellung kann beispielsweise wie in EP-A 0 639 598, EP-A 1 024 158, EP-B 1 063 251 oder WO 04/005363 beschrieben erfolgen.

Die Komponente B) wird in dem erfindungsgemäßen Pulverlack in solchen Mengen eingesetzt, dass auf jede Hydroxylgruppe der Bindemittelkomponente A) 0,8 bis 2,2, vorzugsweise 1,0 bis 2,0, besonders bevorzugt 1,2 bis 1,8 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird.

Zur Beschleunigung der Aushärtung enthalten die erfindungsgemäßen Pulverlacke mindestens eine Zink-Verbindung C) als Aushärtekatalysator. Geeignete Katalysatoren C) sind beliebige anorganische oder organische Zinkverbindungen, wie z. B. Zinkoxid, Zinksulfid, Zinkcarbonat, Zinkfluorid, Zinkchlorid, Zinkbromid, Zinkiodid, Zinkphosphat, Zinkborat, Zinktitanat, Zinkhexafluorosilicat, Zinksulfit, Zinksulfat, Zinknitrat, Zinktetraflüoroborat, Zinkacetat, Zinkoctoat, Zinkcyclohexanbutyrat, Zinklaurat, Zinkpalmitat, Zinkstearat, Zinkbehenat, Zinkcitrat, Zinkgluconat, Zinkacetylacetonat, Zink-2,2,6,6-tetramethyl-3,5-heptandionat, Zinktrifluoracetat, Zinktrifluormethansulfonat und Zinkdimethyldithiocarbamat, oder beliebige Gemische solcher Verbindungen.

Bevorzugter Katalysator C) ist Zinkacetylacetonat.

Die Zink-Katalysatoren C) kommen in den erfindungsgemäßen Pulverlacken in einer Menge von 0,05 bis 5 Gew.-%, vorzugweise von 0,1 bis 3 Gew.-% bezogen auf die Gesamtmenge der Komponenten A) bis E) zum Einsatz.

Bei der in den erfindungsgemäßen Pulverlacken enthaltenen Komponente D) handelt es sich um gegenüber Carboxylgruppen reaktive Gruppen aufweisende Verbindungen eines mittleren Molekulargewichtes von 200 bis 5000, vorzugsweise von 200 bis 2000, besonders bevorzugt von 250 bis 1000, wie sie in der Pulverlacktechnologie im allgemeinen als Vernetzerkomponenten für carboxylgruppenhaltige Pulverlackbindemittel zum Einsatz kommen.

Geeignete Komponenten D) sind beispielsweise die an sich bekannten Polyepoxide, wie Triglycidylisocyanurat (TGIC) und Triglycidylurazol oder deren Oligomere, Glycidylether, wie z.B. solche auf Basis von Bisphenol A, gylcidylfunktionelle Copolymerisate, wie z.B. die bekannten Glycidylmethacrylate (GMA-Harze) aber auch Glycidylester, wie z.B. die der Phthalsäure, Terephthalsäure, Trimellitsäure, Tetrahydro- und Hexahydrophthalsäure, oder beliebige Gemische solcher Polyepoxide.

Geeignete Komponenten D) sind beispielsweise auch β-Hydroxyalkylamidgruppen aufweisende Verbindungen, wie sie in der EP-A 0 322 834 als Vernetzerlcomponenten für carboxylgruppenhaltige Polyester beschrieben sind. Die Herstellung solcher β-Hydroxyalkylamide erfolgt im allgemeinen durch basenkatalysierte Umsetzung organischer Polycarbonsäureester mit β-Hydroxyalkylaminen bei Temperaturen bis zu 200°C unter gleichzeitigem destillativen Entfernen des dabei entstehenden Alkohols.

Bevorzugt kommen in den erfindungsgemäßen Pulverlacken als Komponente D) Terephthalsäurediglycidylester, Trimellithsäuretriglycidylester, TGIC oder β-Hydroxyaljylamide auf Basis gesättigter Dicarbonsäureester mit 4 bis 12 Kohlenstoffatomen im Dicarbonsäureteil oder beliebige Gemische dieser Verbindungen zum Einsatz. Besonders bevorzugt besteht die Komponente D) aus Gemischen von 70 bis 82 Gew.-% Terephthalsäurediglycidylester und 18 bis 30 Gew.-% Trimellitsäuretriglycidylester.

Die Komponente D) wird in dem erfindungsgemäßen Pulverlack in solchen Mengen eingesetzt, dass auf jede Carboxylgruppe der Komponente A) eine mindestens äquimolare Menge an gegenüber Carboxylgruppen reaktiven Gruppen der Komponente D) entfällt, so dass das Verhältnis von gegenüber Carboxylgruppen reaktiven Gruppen zu Carboxylgruppen in den erfindungsgemäßen Pulverlacken von 1,0 bis 1,5, und bevorzugt von 1,0 bis 1,3 beträgt.

Gegebenenfalls kann der erfindungsgemäße Pulverlack weitere aus der Pulverlacktechnologie bekannte Hilfs- und Zusatzstoffe E) enthalten.

Hierbei handelt es sich beispielsweise um übliche Polyurethan-Katalysatoren, wie z.B. Aluminium-tri(ethylacetoacetat), Zinn(II)-hexanoat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn-(IV)-diacetat, Molybdänglykolat 1,5-Diazabicyclo[4.3.0]non-5-en oder 1,8-Diazabicyclo[5.4.0]-undec-7-en, oder um beliebige Gemische solcher Katalysatoren.

Eine weitere Klasse gegebenenfalls mitzuverwendender Katalysatoren sind die üblichen literaturbekannten Verbindungen, die geeignet sind, die Reaktion der Carboxylgruppen der Komponente A) mit den gegenüber Carboxylgruppen reaktiven Gruppen der Komponente D) zu beschleunigen, beispielsweise Ammoniumsalze, wie z.B. Tetrabutylammoniumchlorid, -bromid oder -iodid, Tetraethylammoniumchlorid, -bromid oder -iodid, Trimethylbenzylammoniumchlorid, Dodecyldimethyl-(2-phenoxyethyl)-ammoniumbromid oder Diethyl-(2-hydroxyethyl)-methylammoniumbromid, Phosphoniumsalze, wie z.B. Tetrabutylphosphoniumchlorid, -bromid oder -iodid, Tetraethylphosphoniumchlorid, -bromid oder -iodid, Tetramethylphosphoniumbromid, Octadecyl- tributylphoshoniumbromid, Hexadecyltributylphosphoniumbromid, Katalysatoren mit Imidazolstruktur, wie z.B. Imidazol, 2-Methylimidazol, 2-Methyl-4-ethylimidazol, 2-[(N-Benzylanilino)-methyl]-2-imidazolinphosphat oder 2-Benzyl-2-imidazolinhydrochlorid, oder tert. Amine, wie z. B. N,N-Dimethylcyclohexylamin, N,N-Diethylcyclohexylamin, N-Methylpiperidin, N-Methylmorpholin, Pentamethyldiethylentriamin, N,N'-Dimethylpiperazin oder 1,4-Diazabicyclo[2,2,2]octan.

Bevorzugte gegebenenfalls mitzuverwendende Katalysatoren E) sind Ammonium- und Phosphoniumsalze der vorstehend genannten Art.

Falls überhaupt, werden diese zusätzlichen Katalysatoren E) in einer Menge bis zu 4 Gew.-%, vorzugsweise bis zu 2,4 Gew.-%, bezogen auf die Gesamtmenge der Komponenten A) bis E) eingesetzt, mit der Maßgabe, dass die Gesamtmenge aller im Pulverlack enthaltenen Katalysatoren C) und gegebenenfalls E) 0,05 bis 5 Gew.-%, vorzugsweise 0,1 bis 3 Gew.-% beträgt, wobei der Anteil der Zink-Katalysatoren C) an dieser Gesamtmenge C) und E) mindestens 20 Gew.-% beträgt.

Weitere gegebenenfalls mitzuverwendende Hilfs- und Zusatzstoffe E) sind beispielsweise Verlaufsmittel, wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone, Pigmente, wie z.B. Titandioxid, oder auch Farbstabilisatoren gegen die Gefahr der Überbrennvergilbung, wie z.B. gegebenenfalls inerte Substituenten aufweisende Trialkyl- und/oder Triarylphosphite, wie Triethylphosphit, Triisodecylphosphit, Triphenylphosphit oder Trisnonylphenylphosphit.

Zur Herstellung des fertigen Pulverlackes werden die Bestandteile A), B), C), D) und gegebenenfalls E) innig miteinander vermischt und anschließend in der Schmelze zu einem homogenen Material vereinigt. Dies kann in geeigneten Aggregaten, beispielsweise beheizbaren Knetern, vorzugsweise jedoch durch Schmelzextrusion erfolgen, wobei die Extrusionstemperatur im allgemeinen so gewählt wird, dass ein Maximum an Scherkräften auf die Mischung einwirkt. Um eine vorzeitige Vernetzung des Pulverlackes zu vermeiden, sollte dabei allerdings eine Temperaturobergrenze von 110°C nicht überschritten werden.

Die Reihenfolge der Vereinigung der Einzelkomponenten A) bis E) ist bei diesem Verfahren weitgehend frei wählbar.

Eine im Sinne der vorliegenden Erfindung ebenfalls bevorzugte Art zur Herstellung eines fertigen Pulverlackes ist es beispielsweise auch, in einem ersten Schritt nur einen Teil der Einzelkomponenten, beispielsweise nur die Komponenten A) und C) oder die Komponenten B) und C) oder beispielsweise die Komponenten A), C) und D), in Schmelze, vorzugsweise während oder unmittelbar im Anschluss an die Herstellung der Komponenten A) oder B), innig miteinander zu vermischen und erst zu einem späteren Zeitpunkt, in einem zweiten Schritt, zu dem dann resultierenden, aus den Komponenten A) und C) oder B) und C) oder den Komponenten A), C) und D) bestehenden lagerstabilen homogenen Material die übrigen Komponenten hinzuzufügen und alles gemeinsam zu extrudieren. Bei dieser Art der Pulverlackherstellung ist es bei Mitverwendung einer Carboxylgruppen aufweisenden Komponente A2) als Bestandteil der Bindemittelkomponente A) auch möglich, die Einzelkomponenten, d. h. polymeres Polyol A1) und Carboxylgruppen aufweisende Komponente A2), unabhängig voneinander mit weiteren Pulverlackbestandteilen vorzumischen und erst später bei der gemeinsamen Extrusion sämtlicher gegebenenfalls vorgemischten Einzelkomponenten zur Bindemittelkomponente A) zu vereinigen. Es ist darüber hinaus auch möglich, beliebige Konzentrate (Masterbatches) von Rezepturbestandteilen, beispielsweise solche der Katalysatoren C) und/oder der Vernetzerkomponenten D) und/oder weiterer Hilfs- und Zusatzstoffe E) in einem Teil der Bindemittelkomponente A), zu formulieren und diese dann bei der Pulverlackherstellung den übrigen Komponenten zu einem erfindungsgemäßen Pulverlack hinzuzufügen.

Unabhängig vom gewählten Verfahren werden die Mengenverhältnisse der Einzelkomponenten A), B), C) und D) im übrigen so gewählt, dass, wie bereits oben aufgeführt, auf jede Hydroxylgruppe der Bindemittelkomponente A) 0,8 bis 2,2, vorzugsweise 1,0 bis 2,0, besonders bevorzugt 1,2 bis 1,8 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, auf jede Carboxylgruppe der Komponente A) 0,8 bis 2,0, vorzugsweise 1,0 bis 1,5, besonders bevorzugt 1,0 bis 1,3 gegenüber Carboxylgruppen reaktive Gruppen der Komponente D) entfallen und bei Mitverwendung von aliphatischen und/oder cycloaliphatischen Dicarbonsäuren mit 4 bis 20 Kohlenstoffatomen und/oder aliphatischen Hydroxycarbonsäuren mit 4 bis 18 Kohlenstoffatomen als Komponente A2) der Anteil der Komponenten A2) und D) an der Gesamtmenge der Komponenten A), B), und D) weniger als 10 Gew.-%, vorzugsweise maximal 9 Gew.-%, besonders bevorzugt maximal 8 Gew.-% beträgt. Gegebenenfalls in den Komponenten B) und/oder D) zusätzlich enthaltene Hydroxylgruppen bleiben bei der Wahl der Mengenverhältnisse der Einzelkomponenten unberücksichtigt. Das genannte NCO/OH-Äquivalentverhältnis bezieht sich ausschließlich auf das mengenmäßige Verhältnis von Komponente A) zu Komponente B).

Die extrudierte Masse wird nach Abkühlen auf Raumtemperatur und nach einer geeigneten Vorzerkleinerung, z.B. durch Zerhacken oder Schroten, zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 100 bis 220°C, vorzugsweise jedoch bei für Polyurethanpulverlacke niedrigen Temperaturen von 110 bis 160°C, besonders bevorzugt bei Temperaturen von 120 bis 150 °C, beispielsweise während eines Zeitraums von ca. 5 bis 60 Minuten.

Die erfindungsgemäßen abspalterfreien PUR-Pulverlaclce, die als Bindemittel Pulverlackpolyole mit hohen Restgehalten an Carboxylgruppen von mindestens 0,5 Gew.-% enthalten, liefern bereits bei Einbrenntemperaturen ab 100°C harte, elastische, lösemittel- und chemikalienbeständige Beschichtungen, die sich trotz der niedrigen Einbrenntemperatur durch hervorragende optische Eigenschaften, insbesondere einen sehr guten Verlauf und hohen Glanz auszeichnen, während Uretdionpulverlacke unter Verwendung von carboxylarmen oder -freien Bindemitteln unter ansonsten gleichen Bedingungen Beschichtungen mit erheblichen Verlaufsstörungen und starker Oberflächenstruktur ergeben.

Erfindungsgemäß können beliebige hitzeresistente Substrate, wie beispielsweise solche aus Metallen, Glas, Holz oder temperaturbeständigen Kunststoffen beschichtet werden.

Die nachfolgenden Beispiele dienen zur weiteren Erläuterung der Erfindung.

### Beispiele

Alle Prozentangaben, mit Ausnahme der Glanzwerte, beziehen sich auf Gewichtsprozente.

### Ausgangsverbindungen

### Hydroxyfunktionelle Bindemittel A)

### Polyole A1)

A1-1) Hydroxylgruppenhaltiger Polyester, hergestellt aus 47,3 Gew.-Teilen Terephthalsäure, 44,6 Gew.-Teilen Neopentylglykol, 2,9 Gew.-Teilen Adipinsäure und 5,2 Gew.-Teilen Trimellitsäureanhydrid.
   OH-Zahl: 40 mg KOH/g
   Säurezahl: 13 mg KOH/g
   Carboxylgruppengehalt: 1,04 %
   Schmelzbereich (DTA): 58 bis 62 °C
A1-2) Hydroxylgruppenhaltiger Polyester, hergestellt aus 47,3 Gew.-Teilen Terephthalsäure, 44,6 Gew.-Teilen Neopentylglykol, 2,9 Gew.-Teilen Adipinsäure und 5,2 Gew.-Teilen Trimellitsäureanhydrid.
   OH-Zahl: 40 mg KOH/g
   Säurezahl: 2 mg KOH/g
   Carboxylgruppengehalt: 0,16 %
   Schmelzbereich (DTA): 57 bis 62 °C
A1-3) Hydroxylgruppenhaltiger Polyester, hergestellt aus 45,8 Gew.-Teilen Terephthalsäure, 37,5 Gew.-Teilen Neopentylglykol, 4,6 Gew.-Teilen 1,6-Hexandiol, 0,7 Gew.-Teilen Trimethylolpropan und 11,4 Gew.-Teilen Isophthalsäure.
   OH-Zahl: 20 mg KOH/g
   Säurezahl: 7 mg KOH/g
   Carboxylgruppengehalt: 0,56 %
   Schmelzbereich (DTA): 55 bis 60 °C
A1-4) Hydroxylgruppenhaltiger Polyester, hergestellt aus 53,5 Gew.-Teilen Terephthalsäure, 41,2 Gew.-Teilen Neopentylglykol, 2,8 Gew.-Teilen 1,6-Hexandiol und 2,5 Gew.-Teilen Isophthalsäure.
   OH-Zahl: 23 mg KOH/g
   Säurezahl: 1 mg KOH/g
   Carboxylgruppengehalt: 0,08 %
   Schmelzbereich (DTA): 59 bis 64 °C

### Carboxylgruppen aufweisende Komponente A2)

A2-1) Dodecandisäure, Säurezahl: 487 mg KOH/g, Schmelzpunkt 128°C
A2-2) Carboxylgruppenhaltiger Polyester, hergestellt aus 47,4 Gew.-Teilen Terephthalsäure, 15,4 Gew.-Teilen Isophthalsäure, 32,7 Gew.-Teilen Neopentylglykol, 4,1 Gew.-Teilen Hexandiol und 0,4 Gew.-Teilen Trimethylolpropan.
   Säurezahl: 35 mg KOH/g
   Carboxylgruppengehalt: 2,81 %
   OH-Zahl: 3 mg KOH/g
   Schmelzbereich (DTA): 55 bis 65 °C

### Uretdiongrupnenhaltige Polyadditionsverbitidungen B)

### Uretdiongruppen aufweisende Komponente B1) (gemäß EP-A 0 639 598)

### a) Herstellung eines Estergruppen aufweisenden Diols:

901 g 1,4-Butandiol und 1712 g ε-Caprolacton werden bei Raumtemperatur unter Stickstoffatmosphäre vermischt, mit 0,3 g Zinn(II)octoat versetzt und anschließend 5 Stunden auf 160°C erhitzt. Nach Abkühlen auf Raumtemperatur erhält man ein farbloses, flüssiges Produkt mit folgenden Kenndaten:

| | |
|---|---|
| Viskosität (23°C): | 180 mPas |
| OH-Zahl: | 416 mg KOH/g |
| freies Caprolacton: | 0,2 % |
| mittleres Molekulargewicht (aus OH-Zahl ber.): | 269 |
| Estergruppengehalt (ber.): | 25,3 % |

### b) Herstellung der Estergruppen- und Uretdiongruppen aufweisenden Komponente B1):

1000 g (4,05 val) eines uretdiongruppenhaltigen Polyisocyanates auf Basis von 1-Isocyanato-3,3,5-trimethyl-5-isocyanatomethyl-cyclohexan (IPDI) mit einem Gehalt an freien Isocyanatgruppen von 17,0 % und einem Gehalt an Uretdiongruppen (bestimmt durch Heißtitration) von 20,7 % werden unter trockenem Stickstoff auf 80°C erwärmt. Anschließend gibt man innerhalb von 30 Min. eine Mischung von 436 g (3,24 val) des Estergruppen aufweisenden Diols aus a) und 105 g (0,81 val) 2-Ethyl-1-hexanol zu und rührt bei einer Reaktionstemperatur von max. 105°C, bis der NCO-Gehalt des Reaktionsgemisches nach ca. 2 h auf einen Wert von 0,4 % abgesunken ist.

Die Schmelze wird zum Erkalten auf ein Blech gegossen und man erhält ein praktisch farbloses Festharz mit folgenden Kenndaten:

| | |
|---|---|
| NCO-Gehalt: | 0,4 % |
| Uretdiongruppen-Gehalt (ber.): | 13,4 % |
| NCO-Gehalt gesamt (ber.): | 13,8 % |
| monomeres IPDI: | 0,09 % |
| Schmelzpunkt: | 80 bis 82 °C |

### Uretdiongruppen aufweisende Komponente B2) (gemäß EP-A 1 024 158)

### a) Herstellung eines Estergruppen aufweisenden Diols:

### Estergruppen aufweisendes Diol C 2)

761 g 1,3-Propandiol und 1712 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses flüssiges Produkt mit folgenden Kenndaten:

| | |
|---|---|
| Viskosität (23 °C): | 190 mPas |
| OH-Zahl: | 449 mg KOH/g |
| freies Caprolacton: | 0,3 % |
| mittleres Molekulargewicht (aus OH-Zahl ber.): | 249 |
| Estergruppengehalt (ber.): | 26,7 % |

### b) Herstellung der Estergruppen- und Uretdiongruppen aufweisenden Komponente B2):

1 000 g (4,05 val) des bei der Herstellung von B1) beschriebenen uretdiongruppenhaltigen IPDI-Polyisocyanates werden unter trockenem Stickstoff mit 0,1 g Dibutylzinn(IV)-dilaurat (DBTL) als Katalysator versetzt und auf 80°C erwärmt. Anschließend gibt man innerhalb von 20 min eine Mischung von 305 g (2,45 val) des Estergruppen aufweisenden Diols aus a) und 30,4 g (0,80 val) 1,3-Propandiol zu und rührt bei einer Reaktionstemperatur von max. 115°C bis der NCO-Gehalt des Reaktionsgemisches nach ca. 15 min auf einen Wert von 2,7.% abgesunken ist.

Die Schmelze wird zum Erkalten auf ein Blech gegossen, und man erhält ein praktisch farbloses Festharz mit folgenden Kenndaten:

| | |
|---|---|
| NCO-Gehalt (gef. / ber.): | 2,7/2,5 % |
| Uretdiongruppen-Gehalt (ber.): | 15,5 % |
| NCO-Gehalt gesamt (ber.): | 18,0 % |
| monomeres IPDI: | 0,18 % |
| Schmelzbereich: | 94 bis 100 °C |

### Katalysatoren C)

C1) Zinkacetylacetonat
C2) Zinkpalmitat
C3) Zinkacetat
C4) Zinkoxid

### Gegenüber Carboxylgruppen reaktive Komponenten D)

D1) Araldit^{®} PT 910, Handelsprodukt der Fa. Huntsman Advanced Materials (Basel, Schweiz):
   Gemisch aus Terephthalsäurediglycidylester (70 bis 82 Gew.-%) und Trimellitsäuretriglycidylester (18 bis 30 Gew.-%), Epoxidäquivalent 150 g/val Epoxidgruppe.

### Beispiel 1 (erfindungsgemäß und Vergleich)

| | |
|---|---|
| 48,2 Gew.-Teile | des hydroxylgruppenhaltigen Polyesters A1-1) mit einem Gehalt an Carboxylgruppen von 1,0 % wurden mit |
| 16,0 Gew.-Teilen | der Polyadditionsverbindung B1), entsprechend einem Äquivalentverhältnis von Gesamt-NCO zu OH von 1,5:1, |
| 1,0 Gew.-Teilen | des Katalysators C1) (Zinkacetylacetonat), |
| 2,0 Gew.-Teilen | der Komponente D1) (Araldit^{®} PT 910), entsprechend einem Äquivalentverhältnis von gegenüber Carboxylgruppen reaktiven Gruppen zu Carboxylgruppen von 1,2:1, |

sowie als Hilfs- und Zusatzmittel E) mit

| | |
|---|---|
| 1,0 Gew.-Teilen | Tetrabutylanunoniumbromid (weiterer Katalysator), |
| 1,5 Gew.-Teilen | eines handelsüblichen Verlaufsmittels (Resiflow^{®} PV 88, Fa. Worlee-Chemie, Hamburg, Deutschland) |
| 0,3 Gew.-Teilen | Benzoin und |
| 30,0 Gew.-Teilen | eines Weißpigmentes (Kronos^{®} 2160, Fa. Kronos Titan, Leverkusen, Deutschland) |

gründlich gemischt und anschließend mit Hilfe eines Buss Cokneters vom Typ PLK 46 bei 150 U/min und einer Gehäusetemperatur von 40°C im Einzugsbereich sowie an der Welle bzw. von 80°C im Verfahrensteil homogenisiert, wobei Massetemperaturen von 95 bis 100°C erreicht wurden. Die erstarrte Schmelze wurde mit Hilfe einer Sichtermühle ACM II (Fa. Hosokawa Mikropul) mit einem 90 µm Sieb gemahlen und gesiebt.

Die Gelierzeit (bestimmt nach DIN 55 990, Teil 8, Punkt 5.1) dieses erfindungsgemäßen Pulverlackes betrug bei 180°C ca. 50 s.

Zum Vergleich wurde auf die gleiche Weise aus

| | |
|---|---|
| 49,5 Gew.-Teilen | des Carboxylgruppen-armen hydroxylgruppenhaltigen Polyesters A1-2) (Gehalt an Carboxylgruppen: 0,16 %), |
| 16,4 Gew.-Teilen | der Polyadditionsverbindung B1), |
| 1,0 Gew.-Teilen | des Katalysators C1) (Zinkacetylacetonat), |
| 0,3 Gew.-Teilen | der Komponente D1) (Araldit^{®} PT 910), |
| 1,0 Gew.-Teilen | Tetrabutylammoniumbromid, |
| 1,5 Gew.-Teilen | dem Verlaufsmittel Resiflow^{®} PV 8 8, |
| 0,3 Gew.-Teilen | Benzoin und |
| 30,0 Gew.-Teilen | des Weißpigmentes Kronos^{®} 2160 |

ein Pulverlack hergestellt.

Das Äquivalentverhältnis von Gesamt-NCO zu OH lag wie im vorstehend beschriebenen erfindungsgemäßen Pulverlack bei 1,5:1, das Äquivalentverhältnis von gegenüber Carboxylgruppen reaktiven Gruppen zu Carboxylgruppen ebenfalls bei 1,2:1. Die Gelierzeit dieses Pulverlackes betrug bei 180°C ebenfalls ca. 50 s.

Die beiden so erhaltenen Pulverlacke wurden mit einer ESB-Becherpistole bei einer Hochspannung von 70 KV auf entfettete Stahlbleche gespritzt und jeweils 30 min bei einer Temperatur von 120°C, 130°C und 140°C ausgehärtet. Bei Schichtdicken von etwa 55 - 60 µm wurden folgende lacktechnischen Eigenschaften gefunden:

| | erfindungsgemäßer Pulverlack | | | Vergleich | | |
|---|---|---|---|---|---|---|
| Einbrenntemperatur | 120 °C | 130 °C | 140 °C | 120 °C | 130 °C | 140 °C |
| Erichsentiefung [mm] ^{a)} | 7,0 | > 9,0 | > 9,0 | 7,0 | > 9,0 | > 9,0 |
| Impact [in. lbs.] b) | 20 | > 80 | > 80 | 20 | > 80 | > 80 |
| Glanz ^{c)} (20° / 60°) | 77/94 | 77 / 95 | 82/96 | 32 / 55 | 34/57 | 35 / 58 |
| Verlauf visuell | sehr gut | sehr gut | sehr gut | starke Struktur | starke Struktur | starke Struktur |
| Lösemittelbeständigkeit ^{d)} | 50 / 0-1 | 50 / 0-1 | 50 / 0-1 | 50 / 0-1 | 50 / 0-1 | 50 / 0-1 |

| | | | | | | |
|---|---|---|---|---|---|---|
| a) nach DIN EN ISO 1520 b) nach ASTM D2794 c) nach DIN 67530; 20 ° bzw. 60 ° Reflexionswinkel d) Anzahl der Doppelhübe mit Aceton-getränktem Wattebausch / Beurteilung (0 = Film intakt, 1 = Filmoberfläche angeweicht, 2 = Film bis zum Untergrund angequollen, 3 = Film aufgelöst, m = matt, Glanzverlust) | | | | | | |

Der Vergleich zeigt, dass beide Lacke bereits bei einer Einbrenntemperatur von 130°C vollständig vernetzen. Der erfindungsgemäße Pulverlack, der als Bindemittel das Polyol A1-1) mit einem hohen Restgehalt an Carboxylgruppen enthält, liefert eine allerdings eine Beschichtung mit sehr gutem Verlauf und hohem Glanz, während das Vergleichssystem, das unter Verwendung des carboxylarmen Polyols A1-2) hergestellt wurde, unter ansonsten gleichen Bedingungen einen Lackfilm mit starker Oberflächenstruktur und infolgedessen deutlich reduziertem Glanz ergibt.

Mit dem erfindungsgemäßen Pulverlack bespritzte Strahlbleche wurden zusätzlich jeweils 60 min bei Temperatur von 100°C, 110°C und 120°C ausgehärtet. Die nachfolgende Tabelle zeigt die lacktechnischen Eigenschaften der unter diesen für Polyurethanpulverlacke außerordentlich milden Bedingungen erhaltenen Beschichtungen:

| | erfindungsgemäßer Pulverlack | | |
|---|---|---|---|
| | 100 °C | 110 °C | 120 °C |
| Erichsentiefung [mm] ^{a)} | 3,0 | > 9,0 | > 9,0 |
| Impact [in. lbs.] b) | 20 | > 80 | > 80 |
| Glanz ^{c)} (20° / 60°) | 71 / 89 | 73 / 90 | 76/93 |
| Verlauf visuell | sehr gut | sehr gut | sehr gut |
| Lösemittelbeständigkeit ^{d)} | 50 / 0-1 1 | so / 0-1 | 50 / 0-1 |

| | | | |
|---|---|---|---|
| ^{a) - d)} siehe oben | | | |

### Beispiel 2-10

Nach dem in Beispiel 1 beschriebenen Verfahren wurden ausgehend von verschiedenen Polyesterpolyolen A1), zum Teil unter Mitverwendung von Carboxylgruppen aufweisenden Komponenten A2), verschiedenen Uretdiongruppen enthaltenden Pulverlaclcvernetzem B) und verschiedenen Zink-Katalysatoren C) weiß pigmentierte Pulverlacke hergestellt und mit einer ESB-Becheipistole bei einer Hochspannung von 70 KV auf entfettete Stahlbleche gespritzt. Die Lacke 2 bis 8 wurden anschließend jeweils 30 min bei 130°C, die Lacke 9 und 10 jeweils 30 min bei 120°C eingebrannt. Die nachfolgende Tabelle zeigt die Zusammensetzungen (Gew.-Teile) der Pulverlacke sowie die lacktechnischen Daten der daraus erhaltenen Beschichtungen (Bedeutung der Fußnoten a) - d) und Beurteilung wie in Beispiel 1).

Die Beispiele belegen, dass die erfindungsgemäßen Pulverlacke 2 und 4 bis 9, in denen die Bindemittelkomponente A) mindestens 0,5 Gew.-% an Carboxylgruppen enthält, zu hochglänzenden, glatt verlaufenen Beschichtung führen, während die Vergleichssysteme 3) und 10), die auf Carboxylgruppen-armen Bindemitteln basieren, zwar ebenfalls vernetzte Lackfilme ergeben, die aber einen deutlich niedrigeren Glanz und starke Verlaufsstörungen (Struktur) zeigen.

| Beispiel | | 2 | 3 Vergleich | 4 | 5 | 6 | 7 | 8 | 9 | 10 Vergleich |
|---|---|---|---|---|---|---|---|---|---|---|
| Polyesterpolyol | A1-1) | - | - | - | - | 48,2 | 48,2 | 48,2 | 51,4 | - |
| Polyesterpolyol | A1-2) | - | - | 48,3 | 40,3 | - | - | - | - | 52,6 |
| Polyesterpolyol | A1-3) | 55,8 | - | - | - | - | - | - | - | - |
| Polyesterpolyol | A1-4) | - | 55,6 | - | - | - | - | - | - | - |
| Dodecandisäure | A2-1) | - | - | 0,7 | - | - | - | - | - | - |
| Carboxylpolyester | A2-2) | - | - | - | 10,9 | - | - | - | - | - |
| Uretdionvernetzer | B1) | 9,1 | 10,4 | 15,7 | 13,4 | 16,0 | 16,0 | 16,0 | - | - |
| Uretdionvemetzer | B2) | - | - | - | - | - | - | - | 12,8 | 13,2 |
| Zinkacetylacetonat | C1) | 1,0 | 1,0 | 1,0 | 1,0 | - | - | - | 1,0 | 1,0 |
| Zinkpalmitat | C2) | - | - | - | - | 1,0 | - | - | - | - |
| Zinlcacetat | C3) | - | - | - | - | - | 1,0 | - | - | - |
| Zinkoxid | C4) | - | - | - | - | - | - | 1,0 | - | - |
| AralditPT910 | D1) | 1,3 | 0,2 | 1,5 | 1,6 | 2,0 | 2,0 | 2,0 | 2,0 | 0,4 |
| Tetrabutylanunoniumbromid | | 1,0 | 1,0 | 1,0 | 1,0 | 1,0 | 1,0 | 1,0 | 1,0 | 1,0 |
| Resiflom^{®} PV 88 | | 1,5 | 1,5 | 1,5 | 1,5 | 1,5 | 1,5 | 1,5 | 1,5 | 1,5 |
| Benzoin | | 0,3 | 0,3 | 0,3 | 0,3 | 0,3 | 0,3 | 0,3 | 0,3 | 0,3 |
| Kronos^{®} 2160 | | 30,0 | 30,0 | 30,0 | 30,0 | 30,0 | 30,0 | 30,0 | 30,0 | 30,0 |
| Carboxylgruppengehalt in A) [%] | | 0,56 | 0,08 | 0,72 | 0,73 | 1,0 | 1,0 | 1,0 | 1,0 | 0,16 |
| Äquivalentverhältnis NCO : OH | | 1,5 | 1,5 | 1,5 | 1,5 | 1,5 | 1,5 | 1,5 | 1,5 | 1,5 |
| Äquivalentverhältnis Epoxid : COOH | | 1,2 | 1,3 | 1,3 | 1,3 | 1,2 | 1,2 | 1,2 | 1,1 | 1,4 |
| Erichsentiefung [mm] a) | | > 9,0 | 9,0 | > 9,0 | > 9,0 | > 9,0 | > 9,0 | 7,0 | > 9,0 | > 9,0 |
| Impact [in. lbs.] b) | | > 80 | > 80 | > 80 | > 80 | > 80 | > 80 | 60 | > 80 | > 80 |
| Glanz ^{c)} (20° / 60°) | | 79 / 95 | 26 / 69 | 72 / 94 | 58 / 87 | 77 / 95 | 67 / 91 | 79 / 95 | 74 / 96 | 45 / 59 |
| Verlauf visuell | | sehr gut | starke Struktur | sehr gut | sehr gut | sehr gut | gut | sehr gut | sehr gut | starke Struktur |
| Lösemittelbeständigkeit ^{d)} | | 50 / 0-1 | 50 / 0-1 | 50 / 0-1 | 50 / 0-1 | 50 / 0-1 | 50 / 0-1 | 50 / 1-2 | 50 / 0 | 50 / 0-1 |

## Patentansprüche

1. Polyurethan-Pulverlack, enthaltend
A) eine unterhalb von 40°C in fester und oberhalb von 130°C in flüssiger Form vorliegende hydroxyfunktionelle Bindemittelkomponente mit einem Gehalt an Carboxylgruppen (berechnet als COOH; Molekulargewicht = 45) von 0,5 bis 2,0 Gew.-%, bestehend aus
A1) mindestens einem polymeren Polyol mit einer OH-Zahl von 15 bis 200 mg KOH/g und einem mittleren Molekulargewicht von 400 bis 10000
und gegebenenfalls
A2) mindestens einer, mindestens eine Carboxylgruppe aufweisenden Komponente,
B) eine unterhalb von 40°C in fester und oberhalb von 125°C in flüssiger Form vorliegende Uretdiongruppen und gegebenenfalls freie Isocyanatgruppen aufweisende Polyadditionsverbindung auf Basis aliphatischer und/oder cycloaliphatischer Diisocyanate,
C) mindestens eine Zink-Verbindung als Aushärtekatalysator,
D) eine gegenüber Carboxylgruppen reaktive Gruppen aufweisende Komponente eines mittleren Molekulargewichtes von 200 bis 5000,
und gegebenenfalls
E) weitere aus der Pulverlacktechnologie bekannte Hilfs- und Zusatzstoffe,
mit der Maßgabe, dass die Komponenten A) und B) in solchen Mengenverhältnissen vorliegen, dass auf jede Hydroxylgruppe der Komponente A) 0,8 bis 2,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, die Komponenten A) und D) in solchen Mengenverhältnissen vorliegen, dass auf jede Carboxylgruppe der Komponente A) 1.0 bis 1.5 gegenüber Carboxylgruppen reaktive Gruppe der Komponente D) entfallen, wobei bei Mitverwendung von aliphatischen und/oder cycloaliphatischen Dicarbonsäuren mit 4 bis 20 Kohlenstoffatomen und/oder aliphatischen Hydroxycarbonsäuren mit 4 bis 18 Kohlenstoffatomen als Komponente A2) der Anteil der Komponenten A2) und D) an der Gesamtmenge der Komponenten A), B), und D) weniger als 10 Gew.-% beträgt und der Anteil der Komponente C) an der Gesamtmenge der Komponenten A) bis E) 0,05 bis 5 Gew.-% beträgt.

2. Pulverlack gemäß Anspruch 1, **dadurch gekennzeichnet, dass** die Komponente A1) aus einem Hydroxylgruppen aufweisenden Polyester mit einer durch Differential-Thermoanalyse (DTA) bestimmten Erweichungstemperatur von 40 bis 120°C, einer OH-Zahl von 25 bis 200 und einem mittleren Molekulargewicht von 1000 bis 5000 besteht.

3. Pulverlack gemäß Ansprüchen 1 und 2, **dadurch gekennzeichnet, dass** die Carboxylgruppen aufweisende Komponente A2) aus mindestens einer ein- oder mehrwertigen gesättigten aliphatischen und/oder cycloaliphatischen Carbonsäure mit 4 bis 20 Kohlenstoffatomen und/oder einm Polycarboxypolyester besteht.

4. Pulverlack gemäß Ansprüchen 1 bis 3, **dadurch gekennzeichnet, dass** die Komponente B) aus einer Uretdiongruppen und gegebenenfalls freie Isocyanatgruppen aufweisenden Polyadditionsverbindung auf Basis von Hexamethylendiisocyanat, Isophorondiisocyanat und/oder 4,4'-und/oder 4,2'-Diisocyanatodicyclohexylmethan besteht.

5. Pulverlack gemäß Ansprüchen 1 bis 4, **dadurch gekennzeichnet, dass** die Komponente B) aus einer Uretdiongruppen und gegebenenfalls freie Isocyanatgruppen aufweisenden Polyadditionsverbindung mit einem Mindestgehalt an Carbonsäureestergruppen (berechnet als CO₂; Molekulargewicht = 44) und/oder Carbonatgruppen (berechnet als CO₃; Molekulargewicht = 60) von 1 Gew.-% besteht.

6. Pulverlack gemäß Ansprüchen 1 bis 5, **dadurch gekennzeichnet, dass** der Aushärtekatalysator C) aus mindestens einer organischen Zinkverbindung besteht.

7. Pulverlack gemäß Anspruch 6, **dadurch gekennzeichnet, dass** als Aushärtekatalysator C) Zinkacetylacetonat verwendet wird.

8. Pulverlack gemäß Ansprüchen 1 bis 7, **dadurch gekennzeichnet, dass** als Komponente D) Polyepoxide und/oder β-Hydroxyalkylamide verwendet werden.

9. Pulverlack gemäß Ansprüchen 1 bis 8, **dadurch gekennzeichnet, dass** als Komponente D) Gemische von 70 bis 82 Gew.-% Terephthalsäurediglycidylester und 18 bis 30 Gew.-% Trimellitsäuretriglycidylester verwendet werden.

10. Pulverlack gemäß Ansprüchen 1 bis 9, **dadurch gekennzeichnet, dass** als Komponente E) Tetraalkylammonium- und/oder Tetraalkylphosphoniumsalze eingesetzt werden.

11. Pulverlack gemäß Ansprüchen 1 bis 10, **dadurch gekennzeichnet, dass** die Komponenten A) und B) in solchen Mengenverhältnissen vorliegen, dass auf jede HydroXylgruppe der Komponente A) 1,0 bis 2,0 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, die Komponenten A) und D) in solchen Mengenverhältnissen vorliegen, dass auf jede Carboxylgruppe der Komponente A) 1,0 bis 1,5 gegenüber Carboxylgruppen reaktive Gruppe der Komponente D) entfallen, wobei bei Mitverwendung von aliphatischen und/oder cycloaliphatischen Dicarbonsäuren mit 4 bis 20 Kohlenstoffatomen und/oder aliphatischen Hydroxycarbonsäuren mit 4 bis 18 Kohlenstoffatomen als Komponente A2) der Anteil der Komponenten A2) und D) an der Gesamtmenge der Komponenten A), B), und D) maximal 9 Gew.-% beträgt und der Anteil der Komponente C) an der Gesamtmenge der Komponenten A) bis E) 0,1 bis 3 Gew.-% beträgt.

12. Verwendung der Pulverlacke gemäß Ansprüchen 1 bis 11 zur Beschichtung von Substraten.

13. Substrate, beschichtet mit Polymerfilmen erhältlich aus Pulverlacken gemäß Ansprüchen 1 bis 11.

## Claims

1. Polyurethane powder coating containing
A) an hydroxyfunctional binder component present below 40°C in solid form and above 130°C in liquid form, with a content of carboxyl groups (calculated as COOH; molecular weight = 45) of 0.5 to 2.0 wt.%, consisting of
A1) at least one polymeric polyol with an OH number of 15 to 200 mg KOH/g and a mean molecular weight of 400 to 10,000
and optionally
A2) at least one component containing at least one carboxyl group,
B) a polyaddition compound containing uretdione groups and optionally free isocyanate groups and present below 40°C in solid form and above 125°C in liquid form, based on aliphatic and/or cycloaliphatic diisocyanatcs,
C) at least one zinc compound as hardening catalyst,
D) a component with a mean molecular weight of 200 to 5000 that contains groups reactive to carboxyl groups,
and optionally
E) further auxiliary substances and additives known from powder coating technology,
with the proviso that the components A) and B) arc present in quantitative ratios such that 0.8 to 2.2 isocyanate groups of the component B) are present for each hydroxyl group of the component A), wherein the term isocyanate groups of the component B) is understood to denote the sum of isocyanate groups present in dimeric form as uretdione groups and free isocyanate groups, the components A) and D) are present in quantitative ratios such that 1.0 to 1.5 groups of the component D) reactive to carboxyl groups are present for each carboxyl group of the component A), wherein with the joint use of aliphatic and/or cycloaliphatic dicarboxylic acids with 4 to 20 carbon atoms and/or aliphatic hydroxycarboxylic acids with 4 to 18 carbon atoms as component A2), the proportion of the components A2) and D) in the total amount of the components A), B) and D) is less than 10 wt.% and the proportion of the component C) in the total amount of the components A) to E) is 0.05 to 5 wt.%.

2. Powder coating according to claim 1, **characterised in that** the component A1) consists of a hydroxyl group-containing polyester with a softening point of 40° to 120°C determined by differential thermal analysis (DTA), an OH number of 25 to 200 and a mean molecular weight of 1000 to 5000.

3. Powder coating according to claims 1 and 2, **characterised in that** the component A2) containing carboxyl groups consists of at least one monobasic or polybasic saturated aliphatic and/or cycloaliphatic carboxylic acid with 4 to 20 carbon atoms and/or a polycarboxy polyester.

4. Powder coating according to claims 1 to 3, **characterised in that** the component B) consists of a polyaddition compound containing uretdione groups and optionally free isocyanate groups, based on hexamethylene diisocyanate, isophorone diisocyanate and/or 4,4'- and/or 4,2'-diisocyanatodicyclohexylmethane.

5. Powder coating according to claims 1 to 4, **characterised in that** the component B) consists of a polyaddition compound containing uretdione groups and optionally free isocyanate groups, with a minimum content of carboxylic acid ester groups (calculated as CO₂; molecular weight = 44) and/or carbonate groups (calculated as CO₃; molecular weight = 60) of 1 wt.%.

6. Powder coating according to claims 1 to 5, **characterised in that** the hardening catalyst C) consists of at least one organic zinc compound.

7. Powder coating according to claim 6, **characterised in that** zinc acetylacetonate is used as hardening catalyst C).

8. Powder coating according to claims 1 to 7, **characterised in that** as component D) there are used polyepoxides and/or β-hydroxyalkylamides.

9. Powder coating according to claims 1 to 8, **characterised in that** as component D) there are used mixtures of 70 to 82 wt.% of terephthalic acid diglycidyl ester and 18 to 30 wt.% of trimellitic acid triglycidyl ester.

10. Powder coating according to claims 1 to 9, **characterised in that** tetraalkylammonium salts and/or tetraalkylphosphonium salts are used as component E).

11. Powder coating according to claims 1 to 10, **characterised in that** the components A) and B) are present in quantitative ratios such that 1.0 to 2.0 isocyanate groups of the component B) are present for each hydroxyl group of the component A), the term isocyanate groups of the component B) being understood to denote the sum of isocyanate groups present in dimeric form as uretdione groups and free isocyanate groups, the components A) and D) are present in quantitative ratios such that 1.0 to 1.5 groups of the component D) reactive to carboxyl groups are present for each carboxyl group of the component A), wherein in the case of the joint use of aliphatic and/or cycloaliphatic dicarboxylic acids with 4 to 20 carbon atoms and/or aliphatic hydroxycarboxylic acids with 4 to18 carbon atoms as component A2), the proportion of the components A2) and D) in the total amount of the components A), B) and D) is at most 9 wt.% and the proportion of the component C) in the total amount of the components A) to E) is 0.1 to 3 wt.%.

12. Use of the powder coatings according to claims 1I to 11 for coating substrates.

13. Substrate coated with polymer films obtainable from powder coatings according to claims 1 to 11.

## Revendications

1. vernis pulvérulent de polyuréthanne, contenant
A) un composé liant à fonction hydroxyle, présent sous forme liquide au-delà de 130°C et solide sous 40°C, avec une teneur en radicaux carboxyle (calculé comme COOH, poids moléculaire = 45) située dans l'intervalle allant de 0,5 à 2,0% en poids, consistant en
A1) au moins un polyol polymère ayant un indice OH allant de 15 à 200 mg KOH/g et un poids moléculaire moyen allant de 400 à 10 000,
et le cas échéant
A2) au moins un composé présentant au moins un radical carboxyle,
B) un composé de polyaddition présentant des radicaux uretdione et le cas échéant, des radicaux isocyanate libres, présent sous forme liquide au-delà de 125°C et solide sous 40°C, à base de diisocyanates aliphatiques et/ou cycloaliphatiques,
C) au moins un composé du zinc comme catalyseur de durcissement,
D) un composé présentant des radicaux réagissant avec les radicaux carboxyle, présentant un poids moléculaire moyen allant de 200 à 5000,
et le cas échéant,
E) d'autres auxiliaires et additifs connus dans la technologie des vernis pulvérulents,
avec la condition que les composés A) et B) sont présents en des rapports quantitatifs tels que pour chaque radical hydroxyle du composé A), il y a 0,8 à 2,2 radicaux isocyanate du composé B), où par radicaux isocyanate du composé B), on entend la somme des radicaux isocyanate présents sous forme dimère en tant que radicaux uretdione, et des radicaux isocyanate libres, les composés A) et D) sont présents en des rapports quantitatifs tels que pour chaque radical carboxyle du composé A), il y a 1,0 à 1,5 radical réagissant avec les radicaux carboxyle du composé D), où par utilisation simultanée d'acides dicarboxyliques aliphatiques et/ou cycloaliphatiques ayant 4 à 20 atomes de carbone et/ou d'acides hydroxy-carboxyliques aliphatiques ayant 4 à 18 atomes de carbone comme composé A2), la proportion des composés A2) et D) par rapport à la quantité totale des composés A), B) et D) se situe à moins de 10% en poids et la proportion du composé C) par rapport à la quantité totale des composés A) à E) se situe dans l'intervalle allant de 0,05 à 5% en poids.

2. Vernis pulvérulent selon la revendication 1, **caractérisé en ce que** le composé A1) consiste en un polyester présentant des radicaux hydroxyle, ayant une température de ramollissement déterminée par thermoanalyse différentielle (DTA) allant de 40 à 120°C, un indice OH allant de 25 à 200 et un poids moléculaire moyen situé dans l'intervalle allant de 1000 à 5000.

3. Vernis pulvérulent selon les revendications 1 et 2, **caractérisé en ce que** le composé A2) présentant des radicaux carboxyle consiste en au moins un acide carboxylique aliphatique et/ou cycloaliphatique saturé, mono- ou polyvalent, ayant 4 à 20 atomes de carbone, et/ou un polycarboxypolyester.

4. Vernis pulvérulent selon les revendications 1 à 3, **caractérisé en ce que** le composé B) consiste en un composé de polyaddition présentant des radicaux uretdione et le cas échéant, des radicaux isocyanate libres, à base d'hexaméthylènediisocyanate, d'isophoronediisocyanate et/ou de 4,4'- et/ou 4,2'-diisocyanatodicyclohexylméthane.

5. Vernis pulvérulent selon les revendications 1 à 4, **caractérisé en ce que** le composé B) consiste en un composé de polyaddition présentant des radicaux uretdione et le cas échéant, des radicaux isocyanate libres, avec une teneur minimale en radicaux ester d'acide carboxylique (calculé comme CO₂, poids moléculaire = 44) et/ou radicaux carbonate (calculé comme CO₃, poids moléculaire = 60) de 1% en poids.

6. Vernis pulvérulent selon les revendications 1 à 5, **caractérisé en ce que** le catalyseur de durcissement C) consiste en au moins un composé organique du zinc.

7. Vernis pulvérulent selon la revendication 6, **caractérisé en ce que** l'on utilise comme catalyseur de durcissement C), l'acétylacétonate de zinc.

8. Vernis pulvérulent selon les revendications 1 à 7, **caractérisé en ce que** comme composé D), on utilise un polyépoxyde et/ou un β-hydroxyalkylamide.

9. Vernis pulvérulent selon les revendications 1 à 8, **caractérisé en ce que** l'on utilise comme composé D) , des mélanges de 70 à 82% en poids d'ester diglycidylique de l'acide téréphtalique et de 18 à 30% en poids d'ester triglycidylique de l'acide trimellitique.

10. vernis pulvérulent selon les revendications 1 à 9, **caractérisé en ce que** comme composé E), on met en oeuvre des sels de tétraalkylammonium et/ou de tétraalkylphosphonium.

11. Vernis pulvérulent selon les revendications 1 à 10, **caractérisé en ce que** les composés A) et B) sont présents en des rapports quantitatifs tels que pour chaque radical hydroxyle du composé A), il y a 1,0 à 2,0 radicaux isocyanate du composé B), où par radicaux isocyanate du composé B), on entend la somme des radicaux isocyanate présents sous forme dimère en tant que radicaux uretdione, et des radicaux isocyanate libres, les composés A) et D) sont présents en des rapports quantitatifs tels que pour chaque radical carboxyle du composé A), il y a 1,0 à 1,5 radical réagissant avec les radicaux carboxyle du composé D), où par utilisation simultanée d'acides dicarboxyliques aliphatiques et/ou cycloaliphatiques ayant 4 à 20 atomes de carbone et/ou d'acides hydroxy-carboxyliques aliphatiques ayant 4 à 18 atomes de carbone comme composé A2), la proportion des composés A2) et D) par rapport à la quantité totale des composés A), B) et D) se situe à maximum 9% en poids et la proportion du composé C) par rapport à la quantité totale des composés A) à E) se situe dans l'intervalle allant de 0,1 à 3% en poids.

12. Utilisation du vernis pulvérulent selon les revendications 1 à 11, pour le revêtement de substrats.

13. Substrat, revêtu de films polymères obtenus à partir des laques pulvérulentes selon les revendications 1 à 11.
